# EUROPEAN PATENT SPECIFICATION

(11) **EP 2 610 535 B1**
(45) Date of publication and mention of the grant of the patent: **27.09.2017**
(21) Application number: 11425309.9
(22) Date of filing: 28.12.2011
(51) Int. Cl.: F16K 31/124, F16K 31/40, B29C 49/42

(54) **Pilot-operated valve and fluid control unit comprising said valve**
Fremdgesteuertes Ventil und Flüssigkeitssteuerungseinheit mit besagtem Ventil
Soupape à commande pilote et unité de contrôle de fluide comprenant ladite soupape

(43) Date of publication of application: 03.07.2013
(73) Proprietor: Ode S.r.l., 23823 Colico (LC) (IT)
(72) Inventor: Romeri, Roberto, 23823 Colico (LC) (IT)
(74) Representative: Riccardi, Sergio

(56) References cited:
- EP-A2- 1 435 495
- WO-A1-2007/041873
- DE-A1- 10 357 401

## Description

The present invention relates to a pilot-operated valve and a fluid control unit in which a given number of such valves can be arranged in order the unit to deliver a fluid at desired pressure levels. More in particular, each valve can be independently piloted so as to allow a sequenced delivery of the fluid from the unit.

The fluid control unit according to the present invention advantageously applies, for example, in the blow moulding process of PET bottles and containers in which defined volumes of compressed air have to be sequentially supplied, at corresponding pressure levels, within a mould containing a plastic parison. A conventional plant, in which blow moulding process is performed, is equipped - among others - with one or more compressor units continuously supplying compressed air needed for the blowing stations; therefore the total cost of each PET bottle or container manufactured is greatly affected by the compressed air consumption within the plant. Such consumption of compressed air may be mitigated, and the overall plant efficiency consequently enhanced, by reducing the dead volume of compressed air involved in each cycle of the blowing process, thus meaning at each bottle manufactured. During a typical blow of a PET bottle a predetermined volume of compressed air is supplied through the valves and the pneumatic circuit of the control unit to the plastic parison, the supplied volume being greater than the volume of the blown bottle (final product); indeed an additional volume, that is the dead volume, is necessary within the pneumatic circuit portion comprised downstream of the supply valve and upstream of the parison inlet. Such additional volume of compressed air allows the volume within the blown parison to be supplied at the desired pressure level, in turn, imposed by the manufacturing process. On the other hand, the dead volume does not take part in the blowing action since it is confined, as previously stated, into the rigid sidewall of the above pneumatic circuit portion. Similar drawbacks may be found in other industrial applications in which sequenced delivery of compressed fluid, and what is more at high rate, is requested.

The present invention overcomes the air consumption issue affecting the prior art pneumatic or hydraulic control units and devices by providing pilot-operated valves and fluid control unit which can be mutually arranged in respect of one another so as to reduce the overall size of the control unit inner circuit and, consequently, the resulting dead volume, as will be more clear from the following detailed description.

In particular, WO 227/041873 discloses a pilot operate system that describes a valve device for hollow body blowing machines, operating by blowing compressed air into a blowing volume at two different pressure levels, comprising a pre-blowing valve and a main blowing valve, connected to each other, and each of them comprising a double acting valve body cooperating on one side with a pilot valve and connected to the other side to a supply line. The working pressure is fed in the working area by the pilot valve, which is powered externally, by two supply lines. So said valve system has separate pressure feeding lines, making the system complex and bulky. This has an impact on the cost of production of the pilot-operated valve, on the cost and complexity of maintenance, and on the noise produced said valve system. Having more feeding lines needs carefully handling in situ, and this is one of the more criticized aspects by the users. In addition, the air quantity needed for feeding two lines is much more than the air effectively needed for the blowing of a bottle, so the dead volume produced by this valve system is considerable.

Main object of the present invention is therefore to provide a pilot-operated valve and a fluid control unit comprising said valve characterized by very reduced dead volume.

A second object of the present invention is then to provide a pilot-operated valve and a fluid control unit comprising said valve being improved in terms of response time.

Another object of the present invention is yet to provide a pilot-operated valve and a fluid control unit comprising said valve having low noise emission during operation.

A further object of the present invention is finally to provide a pilot-operated valve and a fluid control unit comprising said valve adapted for pneumatic applications as well as hydraulic applications.

These and other advantages and features of the pilot-operated valve and the fluid control unit comprising said valve according to the present invention will become more clear from the following detailed description taken in conjunction with the annexed drawings wherein like referral numbers indicate identical or similar elements and in which:
fig. 1A is a cross sectional view of a known pilot-operated valve not according to the present invention in its open condition;
fig. 1B is a cross sectional view of the pilot-operated valve in fig. 1A in its closed condition;
fig. 2A is a cross sectional view of a first preferred embodiment of a pilot-operated valve according the present invention in its closed condition;
fig. 2B is a cross sectional view of the pilot-operated valve in fig. 2A in its open condition;
fig. 3A is a cross sectional view of a preferred embodiment of a fluid control unit according to the present invention, in a pre-blowing condition;
fig. 3B is a cross sectional view of the fluid control unit in fig. 3A, in a blowing condition;
fig. 3C is a cross sectional view of the fluid control unit in fig. 3A, in an exhaust condition; and
fig. 3D is a cross sectional view of the fluid control unit in fig. 3A, in a closed condition.

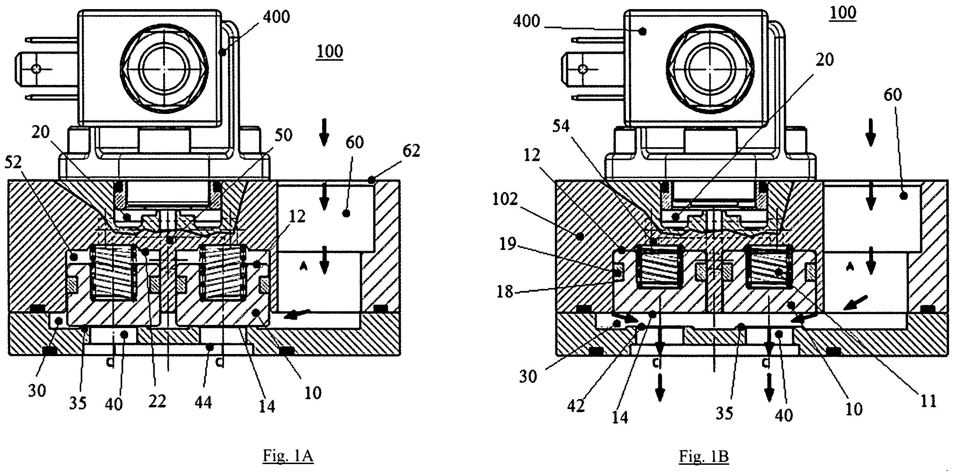

With reference to figs. 1A and 1B, a pilot-operated valve 100, not part of the invention, is shown having a main body 102 in which a control chamber 20, a high pressure chamber 30, a high pressure supply channel 60 and a high pressure delivery channel 40 are formed. The high pressure chamber 30 is in fluid communication with all the control chamber 20, the high pressure supply channel 60 and the high pressure delivery channel 40; furthermore within the high pressure chamber 30 an annular spacer 35 is integrally formed around orifice 42 of said high pressure delivery channel 40. From the high pressure chamber 30 the control chamber 20 extends up to a chamber head 22 provided with a through hole or control pressure inlet 54, the high pressure supply channel 60 extends up to a supply port 62 whilst the high pressure delivery channel 40 from the orifice 42 extends down to a delivery port 44.

A shutter or piston 10 is fitted within the control chamber 20 and slideably received therein between a first position in which an upper portion 12 of the shutter 10 is abutting against the control chamber head 22 and a second position in which a lower portion 14 of the shutter is abutting against said annular spacer 35; in the latter position the shutter sidewall keeps a portion thereof contacting the internal surface of the control chamber 20 thus assuring registration of the shutter 10 in respect of the control chamber 20. Moreover such contacting portion is provided with a peripheral groove 18 in which a piston ring 19 can be seated. Therefore the high pressure chamber 30 and the control chamber 20 are separated from each other in a sealed fashion all along the stroke - travel between said first and second positions - of the shutter 10. It is to be envisioned that said spacer may be also formed integrally with the shutter 10 on its lower portion 14 thus the orifice 42 of the high pressure delivery channel 40 being formed flush (not shown) to the inner wall of the high pressure channel. According to such configuration a set of shutters 10, differing from another shutter set only in terms of spacer dimensions, may be replaced so as to adapt the valve 100 to different operating conditions.

In operation the supply port 62 is connected with a high pressure source (not shown), such as a compressor unit or compressed fluid accumulator and the like; the fluid being at the pressure imposed by the source directly flows within the high pressure chamber 30 of the valve 100; the control pressure inlet 54 is instead connected with a pilot valve 400 - preferably a pilot solenoid valve - in turn, fed by a pressure source being the above high pressure source or a different source depending on the actual dimensioning and operation of the pilot-operated valve 100. The main input or design parameter of the valve is, obviously, the high pressure level requested by the particular process or application the valve is intended for. According to this input parameter a pair of surface areas, or outer diameters in case of cylindrical shape, are respectively selected for the shutter 10 and the annular spacer 35, the shutter abuts against by its lower portion 14 as previously disclosed, under the condition of a shutter lower portion surface area greater than the surface area of the annular spacer 35. In this second or abutting position of the shutter 10 and under the above condition, the fluid pressure within the high pressure chamber 30 can act on the portion of the shutter surface protruding from the spacer surface or, which is the same, the portion of the shutter surface not abutting nor contacting the spacer 35. On the opposite side of the shutter 10, that is its upper portion 12, the control pressure fed by the pilot valve 400 similarly acts on the facing surface area: the final design and dimensioning of the shutter-spacer pair are therefore determined by the balance between the upper load resulting from control pressure acting on the upper surface area and the lower load resulting from the fluid high pressure acting on the shutter protruding surface area. In order to assure a stable balance of the shutter 10 in its second position, resulting in a closed condition of the pilot-operated valve 100, the upper load has to overcome the lower load. On the other hand, the amount said upper load overcomes said lower load must be carefully limited so as to avoid negative effect on the valve response time. Indeed, switch of the pilot-operated valve 100 from the closed condition see known example in (fig. 1A) to the open condition see known example in (fig. 1B), in which shutter lower surface moves away from the spacer 35 and the below orifice 42, occurs by drop of the control pressure each time the pilot valve 400 is controlled to its exhaust condition. Therefore in case of a small difference between the upper and lower loads a reduced control pressure drop is sufficient to initiate the opening of the pilot-operated valve 100 which leads to reduced time response thereof. It is to be envisioned that a fine or more accurate dimensioning may be requested in case the particular application of the valve involves a certain pressure level also at the orifice 42 (or within the high pressure delivery channel 40) while the valve 100 in its closed condition: in such a case an additional lower load must be considered. The above disclosed pilot-operated valve arrangement is preferred for a normally-closed configuration of the same valve. A spring 11 may accordingly be placed within the pilot-operated valve 100 so as to bias the shutter 10 towards its second (closed) position.

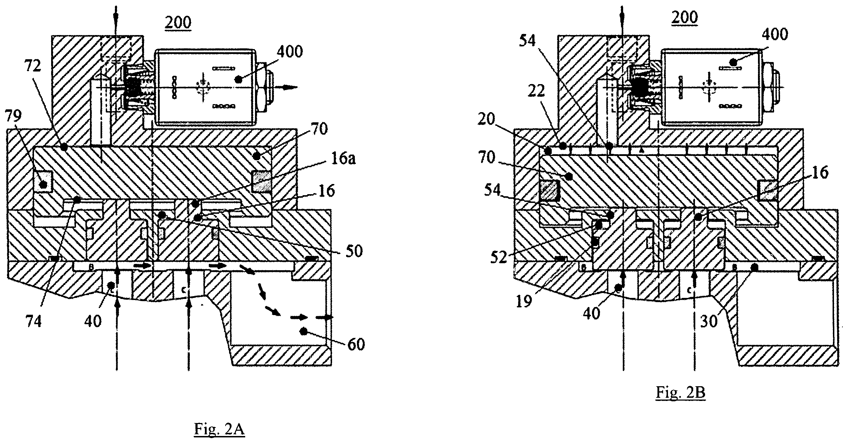

In an example of the pilot-operated valve 100 a plurality of shutters are adopted in place of the above single shutter. In order to displace said plurality of shutters 100 within the control chamber 20 a manifold 50 is fitted therein, or integrally formed therewith, downstream of the control pressure inlet 54, said manifold 50 comprising a plurality of manifold chambers 52 each housing a shutter 10 of said plurality and provided with a respective manifold inlet 54 in fluid communication with the control chamber 20. A plurality of high pressure delivery channels 40 are formed within the high pressure chamber 30 together with their respective annular spacers 35 and coaxially in respect of the manifold chambers 52. Therefore each shutter 10 is still operated as disclosed with reference to the single shutter embodiment, since the control pressure from the control inlet 54 flows through each manifold inlet 54 to act on the upper portion of the respective shutter 10. An embodiment of the pilot-operated valve 200 according to the present invention will be disclosed in the following which results best suited for a normally-open configuration of the valve. The valve 200 is shown in figs. 2A and 2B in which fluid flow direction (indicated by the black arrows) corresponds to insertion of the valve 200 in the fluid control unit as disclosed in the following; with reference to the normal operation of a stand-alone valve 200 such direction is opposite. In addition to the previously disclosed embodiment, such alternative embodiment is provided with a shutter having a stem 16, preferably integrally formed with the shutter 10, extending from the upper portion 12 of the shutter 10 through the manifold port 54; a control piston 70 is then slideably guided within the control chamber 20 between a first position in which its upper surface 72 abuts against the control chamber head 22 and a second position in which its lower surface 74, while contacting the stems 16 at their free ends 16a, forces the shutters 10 to abut against respective annular spacers 35. As stated, this embodiment better applies to normally-open configuration of the valve mainly because of the wide surface area of the control piston 70 allowing a fast and stable switching of the valve from its open condition (see fig. 2A) to its closed condition (fig. 2B). A sealed fit of the piston 70 within the control chamber 20 may be assured by adoption of a piston ring 79.

Hereinbelow response times of four-shutter pilot-operated valves 100 and 200 according to the present invention are listed:

| Valve | Time [ms] |
|---|---|
| Type NC | < 100 |
| Supply 16 bar | |
| Type NC | < 100 |
| Supply 40 bar | |
| Type NO | < 100 |
| Supply 40 bar | |

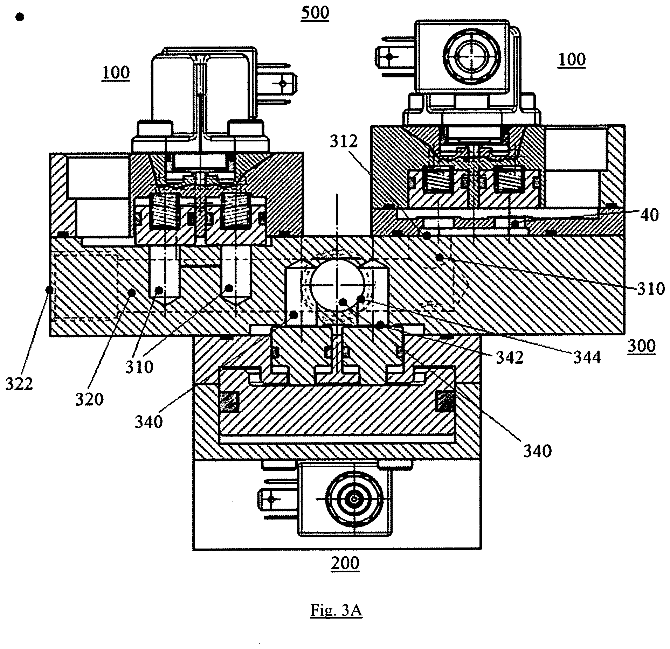

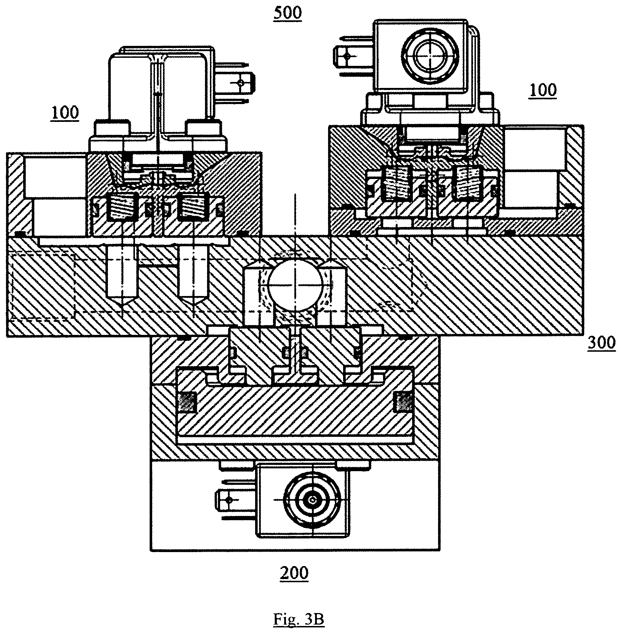

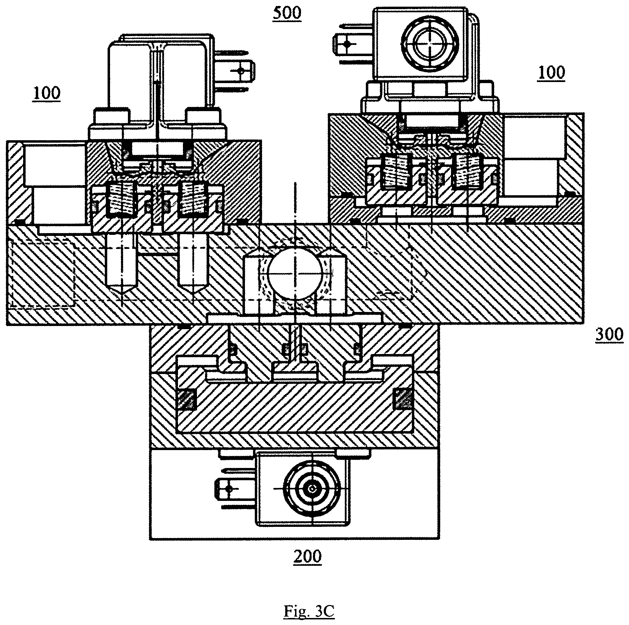

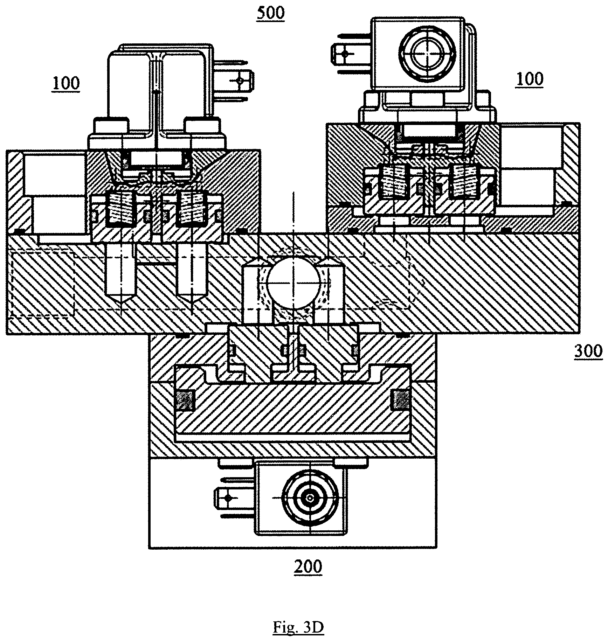

Turning now to figs. 3A to 3D, a fluid control unit 500 according to the present invention is shown comprising a set of the pilot-operated valves 100 and 200 according to the present invention and an interfacing member 300 on which said set is arranged. The interfacing member 300 comprises a main body 350 in which two separate channels are formed: the main channel 320 and the exhaust channel 340 extending from a blowing port 322 and an exhaust port 344, respectively, inside the main body 350. Multiple channels, namely the interfacing channels 310, are also each formed from a respective interfacing port 312 up to the main channel 320 so as to fluidly communicate therewith. An additional channel 310 is finally formed from an outlet port 342 up to the exhaust channel 340 so as to fluidly communicate therewith. In the particular embodiment shown in the figure, the fluid control unit 500 is a pneumatic control unit designed for a PET bottle manufacturing plant performing a blowing process comprising three sequential phases: a first pre-blowing phase in which compressed air is fed to the PET parison (not shown) at first pressure level; a second blowing phase in which compressed air is fed to the PET blown parison at a second higher pressure level and a third phase in which the compressed air fed to the PET bottle or like container is released outside said pneumatic control unit. In order to perform all such phases the interfacing member 300 is provided with three interfacing channels 310: a first pilot-operated valve 100 in a normally-closed configuration is connected with interfacing port 312 of a first interfacing channel 310 by its high pressure delivery channel 40, a second pilot-operated valve 100 in a normally-closed configuration is connected with interfacing port 312 of a second interfacing channel 310 by its high pressure delivery channel 40, and a third pilot-operated valve 200 in a normally-open configuration is connected with interfacing port 312 of the third interfacing channel 310 by its high pressure supply channel 60 and with the outlet port 342 by its high pressure delivery channel 40. The first and second normally-closed pilot-operated valves 100 are supplied with compressed air at the respective required pressure levels, whilst the blowing port 322 and exhaust port 344 are connected with a blowing station (not shown) containing the blow mould and with silencer or accumulator, respectively. The blowing cycle starts with the first phase in which the first normally-closed valve 100 is controlled by the pilot 400 to switch in its open condition thus supplying compressed air at the first (lower) pressure level flowing through the first interfacing channel 310, the main channel 320 and through the blowing port 322 into the blow station; during this phase the second normally-closed valve 100 and the normally-open valve 200 are piloted to their closed condition; the first phase ends by switching the first valve 100 back to its closed position. The second phase, similarly, starts when the second normally-closed valve 100 is controlled so as to be switched to its open position in which the compressed air at a higher pressure level is supplied to the blowing station, while the first normally-closed valve 100 and the normally open valve 200 are kept closed. This phase ends once the second normally-closed valve 100 is switched back to its closed condition. In the third (last) phase the normally-open valve 200 is controlled so as to be switched to its open condition which allows exhaust of the compressed air supplied during the previous phases; in this phase the normally-closed valves 100 are kept closed. Still with reference to the third phase, the total volume supplied for blowing flows along the main channel 320, enters the high pressure supply channel 60 of the normally-open valve 200 and, passing the high pressure delivery channel 40 thereof, exits the pneumatic control unit 500 through the exhaust port 344. Depending on the specific equipment and configuration of the blowing plant the exhaust port 344 may be connected with a silencer (not shown) for a pressure release at the ambient condition, with an air compressed accumulator (not shown) in turn feeding a predetermined stage of the main compressor or to a line (not shown) feeding the valve operated at the first phase.

Still with reference to the figs. 3A to 3D, the pneumatic circuit comprising the main channel 320 and all the interfacing channels 310 constitutes the dead volume associated to each cycle of the blowing process performed with the fluid control unit 500 of the previously disclosed embodiment according to the present invention. A non limitative numerical example may be provided for the pneumatic control unit 500 adopting the particular valves 100 and 200 - shown in the previous table - of the PET bottle manufacturing plant which performs the pre-blowing of the parison (first phase) at about 16 bar, the blowing of the bottle (second phase) at about 40 bar and exhaust of the compressed air at about 40 bar, the valves 100 and 200 being arranged on an interfacing member 300 having 170×165×100 mm dimensions: the corresponding dead volume measured for such pneumatic unit 500 is about 35 cl., which is a really reduced dead volume as those skilled in the art would appreciate.

In an alternative embodiment of the fluid control unit check valves (not shown) may be arranged in the interfacing channels 310 downstream of the corresponding interfacing port 312 thus avoiding undesired opening of valves 100 and/or 200 operating at pressures lower than actual pressure within the pneumatic circuit of the control unit 500. With reference to the blow moulding process during blowing phase the 40 bar compressed air supplied by the blowing valve 100 might be act against the shutters 10 of the pre-blowing valve 100 (16 bar) causing them to open, which is undesired. For such issue and as previously stated, a valve 200 provided with a control piston is preferred for the exhaust phase, since said control piston 70 exerts due to its wide surface area 72 a noticeable closure load on the shutters 10 even if piloted with a reduced control pressure.

In other alternative embodiment of the fluid control unit 500 according to the present invention the associated valves 100 and/or 200 may be designed and manufactured embedded, at least partially, within the interfacing member 300 so as to achieve an even more compact design of the unit 500 and, consequently, an even more reduced dead volume involved at each process cycle. For example the whole high pressure chamber 30 of the valve 100 and/or 200 may be formed on the outer surface of the interfacing member 300 which allows reduction of the path from the valve to the main and exhaust channels 320 and 340, resulting in a further reduced dead volume.

## Claims

1. A valve (100, 200) comprising a high pressure supply channel and a high pressure delivery channel comprising at least one shutter (10), an upper portion (12) thereof being guided in a sealed fashion within a control chamber (20), and a lower portion (14) thereof floating within a high pressure chamber (30), supplied by said high pressure supply channel (60), from an annular spacer (35) being aligned in respect of said high pressure delivery channel (40), said upper and lower portions (12, 14) being mutually dimensioned so as to cause the lower portion (14) to abut against said spacer (35) when a control pressure is supplied within said control chamber (20), ***characterized by*** a plurality of said shutter (10) being each slideably received within a respective seat (52) of a manifold (50), in turn, fixedly placed within said control chamber (20), and each provided with a stem (16) extending from said upper portion (12) towards said control chamber (20), a free end (16a) of said stem (16) being able to contact a control piston (70) guided within said control chamber (20).

2. The valve (100, 200) according to claim 1, wherein each seat (52) is provided with an opening (54) communicating with said control chamber (20).

3. The valve (100, 200) according to claims 1 or 2, comprising a plurality of said shutters (10) and each stem (16) of each shutter (10) is passed through its respective seat opening (54).

4. The valve (100, 200) according to claim 2 or 3, wherein said manifold (50) is integrally formed with said control chamber (20).

5. The valve (100, 200) according to one or more preceding claims, wherein the control pressure is supplied to said control chamber (20) by means of a pilot solenoid valve (400).

6. The valve (100, 200) according to one or more preceding claims, wherein said annular spacer (35) is integrally formed at inlet (42) of said high pressure delivery channel (40).

7. The valve (100, 200) according to one or more preceding claims, wherein said annular spacer (35) is integrally formed on the lower portion (14) of each shutter (10).

8. A fluid control unit (500) comprising a plurality of valves (100, 200) according to one or more preceding claims, said unit being **characterized by** an interfacing member (300) provided with a plurality of interfacing channels (310) each extending from an interfacing port (312) to a main channel (320), in turn, extending up to a blowing port (322), and one outlet channel (340) extending from an outlet port (342) to an exhaust port (344), one of the valves (100, 200) of said plurality having its high pressure delivery channel (40) and high pressure supply channel (60) connected with said outlet port (342) and one of said interfacing ports (312), respectively, the other valves (100, 200) of said plurality being connected at their high pressure delivery channel (40) with respective interfacing port (312).

9. The fluid control unit (500) according to claim 8, wherein said other valves of said plurality are supplied by high pressures differing from one another.

10. The fluid control unit (500) according to claim 9, wherein at least one interfacing channel is provided with a check valve downstream of its respective interfacing port (312).

11. The fluid control unit (500) according to claims 8, 9, or 10 wherein said other valves of said plurality are in accordance with claim 1 or 2 and the said one of the valves of said plurality is in accordance with claim 1 or 4.

12. The fluid control unit (500) according to claim 8, wherein at least one of the high pressure supply channel (60), the high pressure delivery channel (40), the high pressure chamber (30) and the control chamber (20) of at least one of said valves (100, 200) of said plurality is, at least partially, integrally formed within said interfacing member (300).

## Patentansprüche

1. Ventil (100, 200) mit einem Hochdruckspeisekanal (60) und einem Hochdruckabgabekanal (40), enthaltend mindestens einen Verschluss (10) mit einem in einer Steuerungskammer (20) dichtend geführten Oberteil (12) und mit einem in einer vom Hochdruckspeisekanal (60) gespeisten Hochdruckkammer (30) beweglichen Unterteil (14), sowie einen mit dem Hochdruckabgabekanal (40) ausgerichteten ringförmigen Abstandshalter (35), worin die besagten Oberteil (12) und Unterteil (14) derart aneinander bemessen werden, dass das Unterteil (14) gegen den Abstandshalter (35) geführt wird, als ein bestimmter Steuerdruck an die Steuerungskammer (20) gespeist wird, **gekennzeichnet durch** eine Anzahl Verschlüsse, wobei jeder Verschluss (10) in einem entsprechenden Sitz (52) eines in der Steuerungskammer (52) festgelegten Sammlers (50) beweglich aufgenommen wird, und mit einem Schaft (16) versehen wird, wobei sich der Schaft (16) aus dem Oberteil (12) zur Steuerungskammer (20) erstreckt und ein freies Ende (16a) des Schafts (16) in der Lage ist, mit einem in der Steuerungskammer (20) geführten Steuerkolben (70) in Berührung zu kommen.

2. Ventil (100, 200) nach Anspruch 1, worin jeder Sitz (52) mit einer die Steuerungskammer (20) verbindenden Öffnung (54) versehen ist.

3. Ventil (100, 200) nach Ansprüchen 1 und 2, enthaltend eine Anzahl Verschlüsse (10) und jeder Verschlussschaft (16) die entsprechende Sitzöffnung (54) durchdringt.

4. Ventil (100, 200) nach Anspruch 2 bzw. 3, worin der Sammler (50) einteilig mit der Steuerungskammer (20) hergestellt wird.

5. Ventil (100, 200) nach einem bzw. mehreren vorhergehenden Ansprüchen, worin der Steuerdruck an die Steuerungskammer (20) mittels deines Elektroventils (400) gespeist wird.

6. Ventil (100, 200) nach einem bzw. mehreren vorhergehenden Ansprüchen, worin der ringförmige Abstandshalter (35) einteilig am Eingang (42) des Hochdruckabgabekanal (40) hergestellt wird.

7. Ventil (100, 200) nach einem bzw. mehreren vorhergehenden Ansprüchen, worin der ringförmige Abstandshalter (35) einteilig am Unterteil (14) des Verschlusses (10) hergestellt wird.

8. Fluidenzteuereinheit (500) enthaltend eine Anzahl Ventile (100, 200) nach einem bzw. mehreren vorhergehenden Ansprüchen, **gekennzeichnet durch** eine Schnittstelle (300) mit einer Anzahl Schnittstellenkanäle (310), worin jeder Schnittstellenkanal sich von einem Schnittstellenanschluss (312) bis zu einem Hauptkanal (320) und einem Blasenverschluss (322) erstreckt, sowie einen Abgabekanal (340), der sich von einem Abgabeverschluss (342) bis zu einem Auslassverschluss (344) erstreckt, worin der Hochdruckabgabekanal (40) und der Hochdruckspeisekanal (60) eines Ventils mit dem Abgabeverschluss (342) bzw. mit einem Schnittstellenanschluss (312) verbunden sind, und die anderen Ventile (100, 200) an ihrem Hochdruckabgabekanal (40) mit dem entsprechenden Schnittstellenanschluss (312) verbunden sind.

9. Fluidensteuereinheit (500) nach Anspruch 8, worin die anderen Ventile der Anzahl mit einander verschiedenen Hochdrücken versorgt werden.

10. Fluidensteuereinheit (500) nach Anspruch 9, worin mindestens ein Schnittstellenkanal mit einem stromabwärts Rückschlagventil seines entsprechenden Schnittstellenanschlussess (312) versehen ist.

11. Fluidensteuereinheit (500) nach Anspruch 8, 9 bzw. 10, worin die anderen Anzahl Ventile nach Anspruch 1 bzw. 2 und ein Ventil der Anzahl Ventile (100, 200) nach Anspruch 1 bzw. 4 hergestellt sind.

12. Fluidensteuereinheit (500) nach Anspruch 8, worin mindestens ein der Hochdruckspeisekanäle (60), der Hochdruckabgabekanal (40), die Hochdruckkammer (30) und die Steuerungskammer (20)

## Revendications

1. Soupape (100, 200) avec un canal d'alimentation (60) haute pression et un canal de distribution (40) haute pressions, comprenant au moins un tournant (10), dont la partie supérieure (12) est guidée étanche dans une chambre de contrôle (20) et la partie inférieure (14) est movable dans une chambre (30) haute pression alimentée par le canal (60) haute pression par un écarteur annulaire (35) aligné avec le canal de distribution (40), les dites parties supérieure (12) et inférieure (14) étant réciproquement dimensionnées de sorte que la partie inférieure (14) est amenée en butée avec le dit écarteur (35), lorsque une pression de contrôle est alimentée dans la chambre de contrôle (20), **caractérisée par** une pluralité des tournants qui sont reçus chacun dans un siège (52) d'un collecteur (50) à son tour fixé fortement dans la dite chambre de contrôle (20), et chaque tournant (10) est muni d'une tige (16) s'étendant de la partie supérieure (12) vers la chambre de contrôle (20), une extrémité libre (16a) de la tige (16) pouvant venir en contact avec un piston de contrôle (70) guidé dans la chambre de contrôle (20).

2. Soupape (100, 200) selon la revendication 1, dont chaque siège (52) est muni d'une ouverture (54) en communication avec la chambre de contrôle (20).

3. Soupape (100, 200) selon la revendication 1 et 2, comprenant une pluralité des dits tournants (10) et chaque tige (16) de chaque tournant (10) est amenée à passer à travers l'ouverture correspondante (54) du siège (52).

4. Soupape (100, 200) selon la revendication 2 ou 3, dont le collecteur (50) est fait en pièce unique avec la chambre de contrôle (20).

5. Soupape (100,200) selon une ou plusieurs revendications précédentes, dont la pression de contrôle est fournie à la chambre de contrôle (20) par une électrovanne (400).

6. Soupape (100, 200) selon une ou plusieurs revendications précédentes, dont le dit écarteur annulaire (35) est fait en pièce unique à l'entrée du dit canal de distribution (40) haute pression.

7. Soupape (100, 200) selon une ou plusieurs revendications précédentes, dont l'écarteur annulaire (35) est fait en pièce unique à la partie inférieure (14) du dit tournant (10).

8. Unité (500) de contrôle des fluides, comprenant une pluralité des soupapes (100, 200) selon une ou plusieurs revendications précédentes, la dite unité étant **caractérisée par** un organe d'interface (300) muni d'une pluralité des canaux d'interface (310), dont chacun s'étendant d'une porte d'interface (312) à un canal principal (320) à son tour s'étendant jusqu'à une porte de soufflage (322), et d'un canal de sortie (340) s'étendant d'une porte de sortie (342) jusqu'à une porte de vidange (344), une des soupapes (100, 200) de la dite pluralité ayant le canal de distribution (40) haute pression et le canal d'alimentation (60) haute pression connectés respectivement avec la porte de sortie (342) et une des portes d'interface (312), les autres soupapes (100, 200) de la pluralité étant connectées par leur canal de distribution (40) haute pression avec la porte d'interface (312) correspondante.

9. Unité (500) de contrôle des fluides selon la revendication 8, dont les autres soupapes de la pluralité sont alimentées par des hautes pressions différentes entre elles.

10. Unité (500) de contrôle des fluides selon la revendication 9, dont au moins un canal d'interface est muni d'un clapet anti-retour en aval de la porte d'interface (312) correspondante.

11. Unité (500) de contrôle des fluides selon les revendications 8, 9 ou 10, dont les autres soupapes de la dite pluralité sont conformes à la revendication 1 ou 2, et la dite une soupape de la pluralité est conforme à la revendication 1 ou 4.

12. Unité (500) de contrôle des fluides selon la revendication 8, dont au moins un élément parmi le canal d'alimentation (60) haute pression, le canal de distribution (40) haute pression, la chambre (30) haute pression et la chambre de contrôle (20) au moins d'une soupape (100, 200) de la dite pluralité, est fabriqué au moins partiellement en pièce unique avec l'organe d'interface (300).
